Europäisches Patentamt

European Patent Office

Office européen des brevets

(11) Veröffentlichungsnummer: **0 112 478**
**A1**

(12) # EUROPÄISCHE PATENTANMELDUNG

(21) Anmeldenummer: **83111321.2**

(51) Int. Cl.³: **G 09 G 1/28,** H 04 N 9/537

(22) Anmeldetag: **12.11.83**

(30) Priorität: **29.11.82 DE 3244125**

(71) Anmelder: **Deutsche Thomson-Brandt GmbH,
Hermann-Schwer-Strasse 3,
D-7730 Villingen-Schwenningen (DE)**

(43) Veröffentlichungstag der Anmeldung: **04.07.84
Patentblatt 84/27**

(84) Benannte Vertragsstaaten: **AT BE CH DE FR LI LU NL
SE**

(72) Erfinder: **Gleim, Günter, Terra Wohnpark 8,
D-7730 Villingen 24 (DE)**

(54) Schaltungsanordnung zum Einblenden von Zeichen in verschiedenen Farben auf dem Bildschirm eines Sichtgerätes.

(57) Schaltungsanordnung zum Einblenden von Zeichen in verschiedenen Farben auf dem Bildschirm eines Sichtgerätes. In Abhängigkeit von der Größe der von den Signalquellen für die drei Grundfarben Rot, Grün und Blau zugeführten Signalspannungen werden die Amplituden der Ausgangssignale gegengekoppelt.

EP 0 112 478 A1

Deutsche Thomson Brandt GmbH
Postfach 2060
7730 Villingen-Schwenningen

01 12478

25. November 1982
T-PA 422

/

PATENTANMELDUNG

--------------------------------------------------

Schaltungsanordnung zum Einblenden von Zeichen
in verschiedenen Farben auf dem Bildschirm
eines Sichtgerätes.

--------------------------------------------------


## Stand der Technik
-----------------


Die Erfindung geht aus von einer Schaltungsanordnung
zum Einblenden von Zeichen in verschiedenen Farben
auf dem Bildschirm eines Sichtgerätes mit je einem
Generator zur Erzeugung von Steuersignalen mit veränderbaren Amplituden für jeden Farbkanal.

Bei Sichtgeräten und Fernsehgeräten zur Wiedergabe von
Zeichen, z.B. bei der Übertragung von Bildschirmtext,
werden diese über eine Steuerschaltung mit Hilfe von
digitalen Signalen, die die entsprechende Farbe entweder ein- oder ausschalten, wiedergegeben, die auf
die Katoden der Bildwiedergaberöhre gegeben werden.
Hierbei werden zu den entsprechenden Zeitpunkten die

BAD ORIGINAL

Deutsche Thomson-Brandt GmbH
Postfach 2060
7730 Villingen-Schwenningen

25. November 1982
T-PA 422

entsprechenden Katoden gegen das Bezugspotential geschaltet, so daß das gewünschte farbige Zeichen auf
dem Schirm der Bildröhre erscheint. Die Steuerschaltung
besitzt eine Einrichtung zur Beeinflußung der Intensität
der Elektronenstrahlen. Wenn ohne die Einrichtung bei
der Wiedergabe farbiger Zeichen in den Grundfarben
rot, grün und blau sowie deren Mischfarben einschließlich weiß die Intensität auf optimale Wiedergabe von
weiß eingestellt wird, ergibt sich, daß die Intensität
z.B. für die blauen Zeichen für eine gute Erkennbarkeit
nicht mehr ausreicht. Wird dagegen die Intensität für
die blauen Zeichen für eine erkennbare Wiedergabe optimal
eingestellt, besteht die Gefahr, daß Zeichen von Mischfarben insbesondere von weißen Zeichen in ihrer Intensität
viel zu hell wiedergegeben werden, wodurch entweder eine
Defokussierung und damit ein Schärfeverlust des Zeichens
hingenommen werden muß oder aber die Leuchtschicht der
Wiedergaberöhre leidet unter dem hohen Strahlstrom.

Es ist bekannt, die Steuerschaltung derart aufzubauen,
daß für alle 3 Grundfarben einschließlich aller aus den
Grundfarben zusammengesetzten acht Mischfarben eine annähernd gleiche Helligkeit erzielt wird und damit eine
gute Lesbarkeit der Zeichen unabhängig von der Farbe
zu erhalten.(DE-PS 28 03 746).

Ferner ist bekannt, daß die von dem Generator zur Erzeugung der Einblendsignale eingeschaltete Gengenkopplungsspannung für jede der drei Farben getrennt gebildet und
den jeweils beiden anderen Farbkanälen zugeführt wird.
(DE-PS 28 29 431).

Deutsche Thomson-Brandt GmbH
Postfach 2060
7730 Villingen-Schwenningen

25. November 1982
T-PA 422

**0112478**

In der neuen Bildschirmtextnorm wurde festgelegt, daß
die drei Grundfarben in 16 unterschiedlichen Intensitätsstufen übertragen werden sollen. Damit soll eine
bessere Farbauflösung bzw. Nuancierung der Farben erreicht werden. Durch diese zusätzliche Maßnahme genügt
es nicht mehr, die Farbkanäle in Abhängigkeit von der
Anzahl der an den Zeichen beteiligten Farben gegenzukoppeln, sondern es müssen die unterschiedlichen Größen
der Ansteuerspannungswerte mit berücksichtigt werden,
um eine Defokussierung bzw. schlechte Lesbarkeit zu
vermeiden.


## Aufgabe

Der Erfindung liegt deshalb die Aufgabe zugrunde, diese
Defokussierung bzw. schlechte Lesbarkeit auch bei unterschiedlichen Spannungswerten innerhalb einer Farbe zu
vermeiden. Diese Aufgabe wird durch die Maßnahme des
Patentanspruchs gelöst.


## Beschreibung

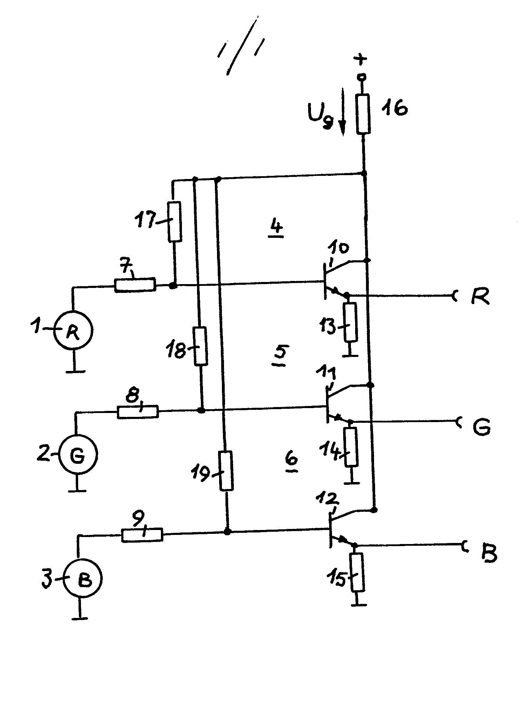

Nachstehend soll an einem Ausführungsbeispiel das
Wesentliche der Erfindung mit Hilfe der Zeichnung erläutert werden.

Deutsche Thomson Brandt GmbH
Postfach 2060
7730 Villingen-Schwenningen

**0112478**

25. November 1982

T-PA 422

Mit 1, 2 und 3 seien die Generatoren angedeutet, welche
den entsprechenden Farbkanälen 4, 5 und 6 für rot, grün
und blau zugeordnet sind. Die Generatoren 1, 2 und 3
geben Spannungen ab, die in n-Stufen veränderbar sein
mögen. Wenn n gegen unendlich geht, handelt es sich
um sich stetig veränderbare Spannungen. Diese Spannungswerte werden über Widerstände 7, 8 und 9,
Emitterfolgerstufen 10, 11 und 12 zugeführt. An den
Emitterwiderständen  13, 14 und 15 werden die Ansteuerspannungen für die Farbendstufen abgenommen.
Sämtlichen Emitterfolgerstufen ist ein gemeinsamer
Widerstand 16 den zusammengeschalteten Kollektorleitungen zugeordnet. Der Spannungsabfall Ug an R16
wirkt als Gegenkopplung über Widerstände 17, 18 und
19 auf die von den Generatoren erzeugte Spannung. Je
mehr Farben und je größer die Ansteuerspannungen sind,
beteiligt
desto größer ist der gegenkoppelnde Spannungsabfall Ug
am Widerstand 16. Auf diese Weise erhält man für die
verschiedenen Grundfarben mit n-Schritten und die
daraus resultierenden Mischfarben die größtmögliche
Intensitätsschrittbreite, ohne daß die Bildröhre übersteuert wird und eine Defokussierung der Elektronenstrahlen nicht auftreten kann.

Die Gegenkopplung kann außer in der dargestellten
Form mit der Summenbildung der Gegenkopplungsspannungen
auch dadurch erfolgen, daß die Gegenkopplungsspannung
jeder Farbe den jeweils beiden anderen Farbkanälen zugeführt wird, indem in jeder Kollektorleitung der Emitterfolgerstufen 10, 11 und 12 je ein Gegenkopplungswiderstand
eingeschaltet ist.

Deutsche Thomson-Brandt GmbH
Postfach 2050
7730 Villingen-Schwenningen
25. November 1982
T-PA 422

0112478

Patentanspruch
---------------

Schaltungsanordnung zum Einblenden von Zeichen in
verschiedenen Farben auf dem Bildschirm eines Sichtgerätes mit je einem Generator zur Erzeugung von
Steuersignalen mit veränderbaren Amplituden für jeden
Farbkanal und einer von der Anzahl der an dem wiedergegebenen Zeichen beteiligten Grundfarben abhängigen
Gegenkopplung. d a d u r c h   g e k e z e i c h n e t,
daß in Abhängigkeit von der Größe der ansteuernden Eingangssignale der einzelnen Farben die Amplituden der
Ausgangssignale gegengekoppelt sind.

Europäisches
Patentamt

EUROPÄISCHER RECHERCHENBERICHT

0112478

Nummer der Anmeldung

EP 83 11 1321

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| A,D | DE-A-2 829 431  (SABA) <br> * Figuren 2,3; Seite 4, Zeile 15 bis Seite 6, Zeile 4 * <br><br> --- | 1 | G 09 G    1/28 <br> H 04 N    9/537 |
| A,D | DE-B-2 803 746  (SABA) <br> * Figur 2; Spalte 2, Zeilen 7-61 * <br><br> ----- | 1 | |

RECHERCHIERTE SACHGEBIETE (Int. Cl. 3)

G 09 G    1/28
H 04 N    9/537

Der vorliegende Recherchenbericht wurde für alle Patentansprüche erstellt.

| Recherchenort | Abschlußdatum der Recherche | Prüfer |
|---|---|---|
| DEN HAAG | 08-03-1984 | VAN ROOST L.L.A. |